# EUROPEAN PATENT APPLICATION

(11) **EP 3 795 633 A1**
(43) Date of publication of application: **24.03.2021**
(21) Application number: 19020536.9
(22) Date of filing: 23.09.2019
(51) Int. Cl.: C08L 33/26

(54) **A METHOD FOR PRODUCING A HYDROGEL**

(71) Applicant: VITO NV, 2400 Mol (BE)
(72) Inventor: The designation of the inventor has not yet been filed
(74) Representative: Luys, Marie-José A.H.

(57) **Abstract**

The present invention relates to a method for producing a hydrogel capable of switching between a hydrophilic state in which the hydrogel is capable of absorbing into its workspace a liquid solvent from a feed solution and a hydrophobic state in which the gel is capable of releasing from its workspace at least part of the absorbed solvent in response to a temperature change, wherein the hydrogel comprises an interpenetrating network of a thermally responsive polymer,
- wherein in a first step a monomer for the thermally responsive polymer to polymerization to form a first polymer network,
- wherein in a second step the monomer for the thermally responsive polymer is subjected to a second polymerization step in the presence of the first polymer network, to provide an interpenetrating polymer network,
- wherein in a third step the monomer for the thermally responsive polymer is subjected to a third polymerization step in the presence of the second network polymer, to provide to provide a triple interpenetrating polymer network.

## Description

The present invention relates to a process for producing a hydrogel according to the preamble of the first claim.

The present invention also relates to the hydrogel as such and to a water treatment process which makes use of the hydrogel of this invention.

Desalination using reverse osmosis is well known in the field of water treatment. Osmosis refers to a phenomenon in which water contained in a diluted solution moves to a solution of high concentration, and reverse osmosis desalination is a process of artificially increasing pressure to move water in the opposite direction, thereby producing fresh water. Reverse osmosis however requires a relatively high pressure, and involves a relatively high energy consumption.

Forward osmosis desalination allows water molecules to move from a feed solution to the osmosis draw solution by using an osmosis draw solution having a higher salt concentration than the feed solution, to separate water from solutes contained therein and produce treated water. Forward osmosis desalination is less energy consuming and permits higher water recovery. Many attempts have been made in the art to develop draw solutes that are suitable to be used in forward osmosis. Ideally, a draw solute for forward osmosis should be capable of generating a high osmotic pressure and a high water flux, whereas simultaneously the time and energy consumption involved to recover or regenerate the draw solute should be as small as possible. Other criteria to be met by the draw solute are a low reverse ion diffusion, they should be non-toxic and show a minimal degradation upon use.

Hydrogels of insoluble cross-linked polymers have become known as draw solutes suitable for forward osmosis. These gels are capable of absorbing water through a forward osmosis membrane that is driven by swelling pressure. Dewatering is enabled by thermal and mechanical stimuli. As an example, an ionizable polysodiumacrylate (PSA) hydrogel produces a high water flux, i.e. a high flux of water from the feed solution into the draw solute, but less than 5% of the absorbed water is released at 50 °C and 3 MPa. Poly(N- isopropylacrylamide) (PNIPAm) hydrogels have been reported capable of releasing about 70% of the absorbed water, however the water flux from the feed solution into the hydrogel is low.

Several attempts have been made to increase the volume available for water absorption and the water flux.

Copolymers of sodium acrylate and N-isopropylacrylamide do not seem capable of generating a high water flux and of easily releasing water.

Incorporation of carbon particle into PSA hydrogels as described by Li et al, Clayton University Australia in Water Research 47 (2013) 209-215, produced hydrogels with a high water flux and increased water release under artificial sunlight exposure. However, water release is slow and continuous desalination is complicated by the combination of the required light exposure and long dewatering times.

US20150291787 discloses nanostructured hydrogels synthesized by photopolymerization of a stimuli-responsive agent and a super absorbent agent in a lyotropic liquid crystal meso-phase template formed using a surfactant in a non-reactive polar solvent. A lyotropic liquid crystal phase will spontaneously form in the non-reactive polar solvent at suitable surfactant concentrations. The resulting mixture is subjected to photochemical reaction for polymerizing and cross-linking the stimuli-responsive agent and super absorbent agent to form the hydrogel. Then, the lyotropic liquid crystal phase is removed from the third mixture containing the surfactant to yield the lyotropic liquid crystal-templated composition. The swelling and deswelling properties of the lyotropic liquid crystal-templated compositions are tunable by the appropriate stimuli response. However, the need to use a variety of reactants and to carry out a variety of process steps complicates the synthesis of these hydrogels.

There is thus a need for a hydrogel that can be produced in a simplified production process and is suitable for scaling up.

There is also a need for a hydrogel with an increased workspace into which a hydrophilic solvent or water can be absorbed.

The present invention therefore seeks to provide a hydrogel that can be produced in a more simple production process, the production process should preferably be suitable to be scaled up to production levels commonly used in industry.

This is achieved according to this invention with a hydrogel that is produced according to the method of the first claim below.

Thereto the method of this invention for producing a hydrogel capable of switching between a hydrophilic state in which the hydrogel is capable of absorbing solvent from a feed solution and a hydrophobic state in which the gel is capable of releasing at least part of the absorbed solvent in response to a temperature change, wherein the hydrogel is composed of an interpenetrating network of a thermally responsive polymer,
- wherein in a first step a monomer for the thermally responsive polymer to polymerization to form a first polymer network,
- wherein in a second step the monomer for the thermally responsive polymer is subjected to a second polymerization step in the presence of the first polymer network, to provide an interpenetrating polymer network,
- wherein in a third step the monomer for the thermally responsive polymer is subjected to a third polymerization step in the presence of the second polymer network, to provide a triple interpenetrating polymer network.

The hydrogel that may be obtained with the method of this invention is capable of switching between a hydrophilic state in which it is capable of absorbing solvent, and a hydrophobic state in which it is capable of releasing solvent. Switching form a hydrophobic state to a hydrophilic state will generally occur upon activation by a trigger, for example when the hydrogel is heated to a temperature which is equal to or higher than a lower critical solution temperature (LCST).

It will be clear to the skilled person that the LCST temperature at which switching from the hydrophilic to the hydrophobic state takes place may vary and will depend on the nature of the hydrogel, i.e. the nature of the thermally responsive polymer contained therein, or the nature of the polymer network composing the hydrogel. As a result, the hydrogel of this invention is suitable for use with a variety of hydrophilic solvents, in particular it is suitable for use with protic solvents, for example low molecular weight alcohols such as methanol, ethanol, iso-propanol etc, and water or a mixture of two or more hereof. It shall be clear that the hydrogel of this invention is also suitable for use with other protic solvents known to the skilled person.

The inventors have surprisingly found that the method of this invention permits producing a hydrogel which shows a desired combination of properties. In particular it has been observed that the triple interpenetrating polymer network that may be obtained with the present invention shows a significantly increased workspace in comparison to the single or double network obtained respectively in the first and second step. In particular a non-linear increase of the workspace has been observed, when moving from the double network that results from step 2 towards the triple interpenetrating network hydrogel that results from step 3. With a non-linear increase is meant that the workspace of the triple interpenetrating network differs from the workspace of the double interpenetrating network obtained after step 2, to an extent which extends beyond the linear increase that can be expected from the difference in workspace of the polymer obtained in the first and second step. In particular, the inventors have observed that the workspace of the hydrogel that may be obtained with this invention, may be increased to a value which is higher than three times the workspace of the single interpenetrating polymer network obtained from the first step. In particular, an exponential increase of the workspace has been observed, when carrying out more than two polymerization steps as described in the first claim.

The unexpected increase of the workspace has been found to be associated with unexpected mechanical properties of the hydrogel. Whereas the single polymer network obtained in the first step has a relatively smaller workspace, and was found to be brittle and unsuitable to permit size reduction into particles suitable to be used as a hydrogel, the hydrogel obtained from the third step comprising a triple interpenetrating network was found to be mechanically stable and could be processed into particles suitable to be used as a hydrogel for example by crushing or any other suitable size reduction step.

The hydrogel of this invention may be repeatedly be subjected to reversible swelling as a result of solvent absorption in the workspace of the hydrogel and shrinking as a result of solvent release from the workspace of the hydrogel. The reversible swelling and shrinking of the hydrogel results from reversible solvent absorption where solvent is filling the workspace of the hydrogel and solvent desorption where at least part of the absorbed solvent is released from the workspace of the hydrogel. This observation has been made in particular when water is used as the solvent. Release of solvent from the workspace may be triggered by a thermal trigger, i.e. heating of the swollen hydrogel having solvent absorbed in its workspace up to its lower critical solution temperature LCST. In response to the thermal trigger, solvent absorbed in the workspace may be released to a level where the hydrogel remains more or less liquid and suitable to be transported by transport means, conventionally used for liquid transport such as pumping, or transport means suitable for transporting a solid material or a gel. The skilled person will be capable of determining whether complete release of the solvent from the workspace is to be preferred, or a partial release, as well as the degree of release. Where needed, the hydrogel may be mixed with a hydrogel transport aid, for example to form a suspension of the hydrogel in a liquid.

Advantageously, hydrogel depletion is incomplete in such a way that the hydrogel of this invention will always retain a certain, limited amount of solvent, so called residual solvent. By controlling the solvent depletion from the hydrogel or in other words by controlling the remaining amount of solvent contained in the workspace, the viscosity of the hydrogel may be controlled and selected taking into account the desired process for handling the hydrogel. As a result of the presence of residual solvent, the hydrogel will be more or less liquid during use and suitable to be transported by conventional liquid transport means, such as pumping. The amount of residual solvent may vary within some ranges, and it will be understood that it may depend on the nature of the hydrogel, in particular on the nature of the polymer forming the triple interpenetrating network, and the degree of interpenetration. The fact that the viscosity of the hydrogel obtained in the third step may be controlled by controlling the amount of liquid or solvent in the workspace is surprising as the polymer networks obtained from the first or second step of the method of this invention have been found to release solvent or to dehydrate to a large extent when heated to the LCST and to transform into a solid powder, the viscosity of which is hard to control. Moreover, such solvent depleted polymers have been found to show a collapsed polymer network and a significantly reduced workspace.

The hydrogel of this invention additionally has been found to show a sharp LCST, with a difference between the lowest temperature at which solvent absorption takes off and the highest temperature at which solvent release is initiated of maximum 10°C, preferably maximum 7.5°C, more preferably maximum 5°C. This is advantageous as the energy input needed to thermally trigger the hydrogel to release solvent, remains limited. As a result hereof, use can be made of natural energy sources, i.e. heating by air, sun, hot water etc. may be used to achieve the LCST.

This combination of a more than linearly increased workspace, improved mechanical properties, narrow LCST temperature range, reversible swelling and shrinking and controllable viscosity, is surprising.

In a preferred embodiment, the interpenetrating network of the hydrogel further comprises a hydrophylic polymer, and the method of this invention for manufacturing such a hydrogel comprises the following steps :
- in a first step a monomer for the thermally responsive polymer and a monomer for the hydrophilic polymer are subjected to polymerization to form a first polymer network,
- in a second step the monomer for the thermally responsive polymer and the monomer for the hydrophilic polymer are subjected to a second polymerization step in the presence of the first polymer network, to provide an interpenetrating polymer network,
- in a third step the monomer for the thermally responsive polymer and the monomer for the hydrophilic polymer are subjected to a third polymerization step in the presence of the second polymer network, to provide to provide a triple interpenetrating polymer network.

The presence of the hydrophilic polymer permits further tuning of the properties of the hydrogel to an envisaged application, such as the mechanical properties, the LCST, the workspace, the viscosity, etc. without being limited thereto.

In a preferred embodiment, the reaction mixture in each of the first, second and third step is subjected to homogenization in advance of being subjected to polymerization and/or cross-linking.

Without wanting to be bound by this theory, the inventors believe that the combination of an increased workspace, narrow LCST range and desired mechanical properties may be achieved by a more homogeneous distribution of the cross-links in the polymer network and a smaller incidence of defects in the cross-links of the polymer network. They also believe that this smaller incidence of defects may be obtained by un-coupling diffusion of the monomers throughout the reaction medium by subjecting the reaction mixture to homogenization, from the polymer network building and that both process may be controlled independently of each other.

In a preferred embodiment, the second step of the method of this invention is carried out in the additional presence of a photo-initiator and the reaction mixture is subjected to homogenisation in advance of being subjected to irradiation to initiate cross-linking.

In a further preferred embodiment, the third step of the method of this invention is carried out in the additional presence of a photo-initiator and the reaction mixture is subjected to homogenisation in advance of being subjected to irradiation to initiate cross-linking.

Within the scope of this invention a wide variety of irradiation techniques may be used, for example those selected from the group of UV-irradiation, electron beam irradiation, or any other irradiation technique considered suitable by the skilled person.

The inventors believe that the smaller incidence of defects in the polymer network obtainable with the method of this invention may be attributed to the homogenization of the reaction mixture before the reaction mixture is subjected to irradiation. Again homogenization carried out in advance of the photochemical cross-linking, permits un-coupling diffusion of the monomers throughout the reaction medium to obtain a more homogeneous distribution, from the building of the polymer network, and permits controlling both independently of each other.

In a further preferred embodiment, the temperature at which solvent may be absorbed in the workspace is at least 0°C, preferably at least 5°C, more preferably at least 7.5°C, most preferably at least 10°C or even at least 15°C. It shall however be clear to the skilled person that this temperature may vary with the nature of the polymer network and the nature of the solvent with which the hydrogel is to be used and the intended application.

In a still further preferred embodiment, a temperature at which solvent may be released from the workspace is maximum 50°C, preferably maximum 40°C, more preferably maximum 37°C, most preferably maximum 35°C, in particular maximum 30°C, more in particular maximum 25°C. A suitable release temperature is in the range of 25-35°C. It shall however be clear to the skilled person that the release temperature may vary with the nature of the polymer network, the nature of the solvent with which the hydrogel is to be used and the intended application.

### Hydrogel.

The hydrogel of this invention will usually comprise a suitable thermally responsive polymer, which has been polymerized and cross-linked in such a way that an interpenetrating polymer network may be obtained. In a preferred embodiment, the hydrogel of this invention is composed of one single thermally responsive polymer. In a further preferred embodiment, the hydrogel of this invention comprises a mixture of two or more interpenetrating networks. In a preferred embodiment, the hydrogel may also contain a suitable hydrophilic polymer, which together with the thermally responsive polymer forms an interpenetrating network.

With a "thermally responsive polymer" is meant a polymer capable of inducing swelling of the hydrogel to achieve solvent absorption, and deswelling to achieve solvent release during the forward osmosis process, in response to temperature changes.

Within the scope of this invention, a hydrogel is understood to be a solvent-swellable, cross-linked polymeric network that exhibits the ability to swell and retain a significant amount of solvent within its structure, but will not dissolve in the solvent. A hydrogel possess the capacity to entrap a large volume of solvent into its workspace. Within the scope of this invention "workspace" means an empty volume present in the polymer network, caused by the flexibility of the polymeric network.

In the swollen state, a hydrogel may contain a large amount of solvent absorbed therein, in particular in the workspace. Any hydrophilic 3D polymers if present, will usually occupy a smaller volume relative to the workspace.

A hydrogel of the present invention can typically swell and retain from 50 wt. % up to 99 wt. % solvent, more preferably 85 wt. % up to 98 wt. % solvent within its structure.

The hydrogel of this invention is suitable for use with a wide variety of solvents, such as for example water, protic solvents for example low molecular alcohols, for example methanol, ethanol, propanol, iso-propanol or mixtures of two or more hereof. It shall be clear to the skilled person that the hydrogel of this invention is suitable for use with other protic solvents as well. Solvents suitable for use with this invention generally are hydrophilic.

### Thermally responsive polymers

Thermally responsive polymers, i.e. polymers capable of absorbing and releasing solvent in response to a thermal trigger are well known to the skilled person.

Thermally responsive polymers suitable for use in this invention include poly-ionic thermally responsive polymers, in particular those formed from an ionic liquid monomer. For example, the poly-ionic thermally responsive polymer may be selected from the group comprising polyamide, polyacrylamide, polyolefin oxide, polyvinyl-methylether, poly(dimethylamino)ethyl methacrylate, polytetrabutylphosphonium p-styrene sulfonate, polytributylhexyl phosphonium 3-sulfopropyl methacrylate, polytributylhexyl phosphonium 3-sulfopropyl acrylate - for example polytributylhexyl phosphonium 3-sulfopropyl methacrylate, polytetrabutylphosphonium maleate, polytetrabutylphosphonium fumarate, copolymers and blends thereof. The respective monomers of the polyionic responsive polymers are as shown in Table 1.

According to another embodiment of this invention, the hydrogel comprises a polymer or a co-polymer of one or more of: (meth)acrylic acid, salts of (meth)acrylic acid, esters of (meth)acrylic acid and hydroxyl derivatives thereof, itaconic acid, salts and acids of esters of (meth)acrylic acid, amides of (meth)acrylic acid, N-alkyl amides of (meth)acrylic acid, salts and acids of N-alkyl amides of (meth)acrylic acid, N-vinyl pyrrolidone, (meth)acrylamide, N-alkyl derivatives of (meth)acrylamide, alkyl ammonium salts, N-alkyl derivatives of an alkyl (meth)acrylate, 2- acrylamido-2 -methyl-1 -propanesulfonic acid, potassium salt of 3-sulfopropyl acrylate, 2- (acryloyloxy)ethyl trimethyl ammonium methyl sulfate, acrylamide (AAm), N-isopropyl acrylamide (NIP AM), 2-hydroxyethyl (meth)acrylate (HEA, HEMA), acrylic acid (AAc), salts of acrylic acid (potassium, sodium and ammonium), potassium salt of 3-sulfopropyl acrylate (SPAK), poly(ethylene glycol)acrylate, poly(ethylene glycol)alkyl ether acrylate, methacrylic acid-2-dimethylaminoethyl ester, dimethylaminoethyl acrylate or diallyldimethylammonium chloride (DADMAC).

Certain embodiments of the polymer hydrogel may therefore comprise at least one of poly(N-isopropylacrylamide), poly(sodium acrylate), poly(vinylsulfonic acid, sodium salt), polyvinyl alcohol, Poly(N-isopropylacrylamide)-co-poly(sodium acrylate) or a combination thereof. Examples of thermally responsive polyacrylamides suitable for use with this invention include poly(N-isopropylacrylamide) (PNIPAm), poly(N,N'-diethylacrylamide). Examples of thermally responsive polyamides include poly(N-vinyl-isobutylamide), poly(N-vinyllactam). Examples of polyolefin oxides include polypropylene oxide, polyethylene oxide.

In a preferred embodiment of this invention, a number of ethylenically-unsaturated monomer can be used to form the polymer hydrogel. Suitable monomers include at least one ethylenically-unsaturated monomer, selected from (meth)acrylic acid, salts of (meth)acrylic acid, esters of (meth)acrylic acid and hydroxyl derivatives thereof, itaconic acid, salts and acids of esters of (meth)acrylic acid, amides of (meth)acrylic acid, N-alkyl amides of (meth)acrylic acid, salts and acids of N-alkyl amides of (meth)acrylic acid, N- vinyl pyrrolidone, (meth)acrylamide, N-alkyl derivatives of (meth)acrylamide, alkyl ammonium salts, N-alkyl derivatives of an alkyl (meth)acrylate, 2- acrylamido-2 -methyl- 1 -propanesulfonic acid, potassium salt of 3-sulfopropyl acrylate, and 2- (acryloyloxy)ethyl trimethyl ammonium methyl sulfate. Furthermore, in some embodiments, the ethylenically-unsaturated monomer is selected from at least one of acrylamide (AAm), N-isopropyl acrylamide (NIP AM), 2-hydroxyethyl (meth)acrylate (HEA, HEMA), acrylic acid (AAc), salts of acrylic acid (potassium, sodium and ammonium), potassium salt of 3-sulfopropyl acrylate (SPAK), poly(ethylene glycol)acrylate, poly(ethylene glycol)alkyl ether acrylate, methacrylic acid-2-dimethylaminoethyl ester, dimethylaminoethyl acrylate and diallyldimethylammonium chloride (DADMAC).

In a further preferred embodiment, the ethylenically-unsaturated monomer is selected from N-isopropylacrylamide, sodium acrylate or a combination thereof.

Preferably however poly(N-isopropylacrylamide) (PNIPAm) is used.

The poly(N-vinyllactam) may be one or more of the compounds represented below, wherein the lactam ring is a 5-, 6- or 7- membered ring :

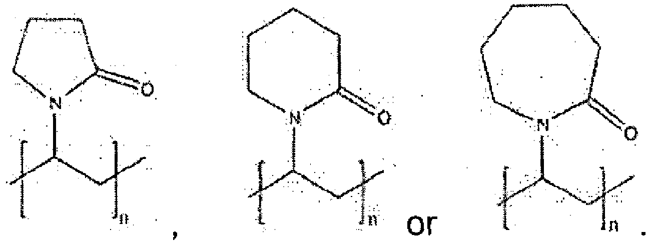

**Table 1: Structural formula of different monomers forming the thermally-responsive polymers**

| **Monomer** | **Structure** |
|---|---|
| tetrabutylphosphonium p-styrene sulfonate | 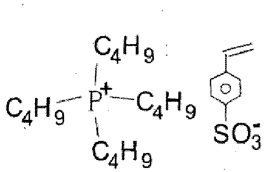 |
| tributylhexyl phosphonium 3-sulfopropyl methacrylate | 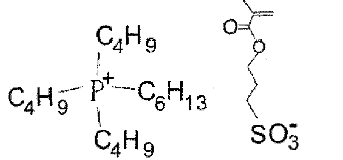 |
| tributylhexyl phosphonium 3-sulfopropyl acrylate | |
| tetrabutylphosphonium maleate | 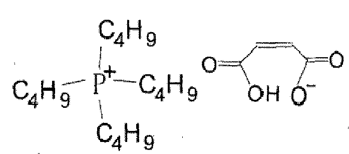 |
| tetrabutylphosphonium fumarate | 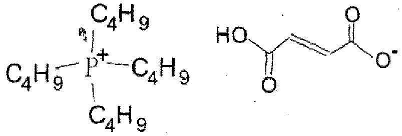 |

### Hydrophilic polymer.

In an embodiment of this invention, the polymer network may comprise at least one hydrophilic polymer. The at least one hydrophilic polymer may be any hydrophilic polymer considered suitable by the skilled person, for example the hydrophilic polymer may contain polar or charged functional groups which involve hydrophilic behavior and solvent solubility of the polymer. Hydrophilic polymers particularly suitable for this invention are preferably selected from the group comprising polyacrylamide, polyethylene oxide, poly sodium acrylate (PSA), polyvinyl alcohol (PVA), and copolymers and blends of two or more of the afore-mentioned polymers.

Those polymers may be obtained in the method of this invention by polymerization of their respective monomers, in particular, acrylamide, ethylene oxide, sodium acrylate, vinyl alcohol and mixtures comprising two or more of the afore-mentioned monomers.

### Hydrogel polymer.

Within the scope of this invention the triple interpenetrating polymer network contained in or composing the hydrogel of this invention may encompass a network of either linear or branched thermally responsive polymers. At least part of the chains of the thermally responsive polymers penetrate each other on a molecular scale. In the triple interpenetrating polymer network the polymer chains of the at least three networks penetrate each other on a molecular scale. As has been explained above, the inventors believe that the combination of an increased workspace, narrow LCST range and desired mechanical properties of the hydrogel polymer network may be attributed to a more homogeneous distribution of the cross-links between the polymer chains and a smaller incidence of defects in the cross-links. They also believe that this smaller incidence of defects may be attributed to the un-coupling of the diffusion of the monomers throughout the reaction medium to achieve homogenization of the reaction mixture and the building of the polymer network. This un-coupling permits to control both steps in an independent manner.

According to a different embodiment, the triple interpenetrating polymer network may encompass a network of either linear or branched thermally responsive polymers, wherein at least part of the thermally responsive polymers penetrate each other on a molecular scale. In the triple interpenetrating polymer network the at least three networks penetrate each other on a molecular scale.

According to a still different embodiment, the triple interpenetrating polymer network may encompass a network of either linear or branched thermally responsive polymers and hydrophilic polymers, wherein at least part of the thermally responsive and hydrophilic polymers penetrate each other on a molecular scale.

The triple interpenetrating polymer network for the hydrogel of this invention may be formed or produced using any method considered suitable by the skilled person suitable for obtaining an interpenetrating network as described above. In particular, the triple interpenetrating polymer network may be formed by polymerization of the monomers for the thermally responsive polymer described above, the network may also be performed by polymerization of the monomers for the thermally responsive polymer in the presence of the monomers for the hydrophilic polymer described above.

In a preferred embodiment of this invention, the hydrogel polymer obtained with the method of this invention may be a hydrogel of a triple interpenetrating network of PNIPAm.

A PNIPAm may for example be formed by polymerizing N-isopropylacrylamide (NIPAm) in the presence of a polymerization initiator and linear polysodiumacrylate.

A PNIPAm polyvinylalcohol hydrogel of this invention may for example also be formed by polymerizing N-isopropylacrylamide (NIPAm) in the presence of linear polyvinylalcohol. It will be clear to the skilled person person that a triple interpenetrating polymer network or hydrogel of this invention for example represented by PNIPAm/PVA is different from a PNIPAm hydrogel and is different from a copolymer of PNIPAm and and polyvinylalcohol, or a copolymer of PNIPAm and PSA respectively.

The hydrogel that may be obtained with this invention may take any form considered suitable by the skilled person. In an embodiment, the hydrogel takes the form of a layer or a sheet, which is suitable for being reduced into particles. According to another embodiment, the hydrogel may take the form of particles, aggregated particles, a bulk hydrogel, a continuous film, the hydrogel may be coated on a semi-permeable membrane used in forward osmosis,- either as a single layer or as multiple layers on the surface of the semi-permeable membrane. According to another embodiment of this invention the hydrogel may take the form of a bulk hydrogel or a continuous film or sheet or the like which may be reduced into particles of a desired size.

### Polymerisation initiator

Within the scope of this invention the polymerization reaction and/or cross-linking reaction may be a free-radical polymerization which is initiated chemically, caused by the presence of a chemical polymerization initiator. Chemical polymerization initiators are generally known to the skilled person.

According to another preferred embodiment, the method of this invention may involve a photochemical initiated cross-linking polymerization reaction, performed in the presence of a photo initiator. Within the scope of this invention a wide variety of photopolymerization initiators may be used. Examples of photo-initiators suitable for use with this invention are well known to the skilled person and may for example be selected from the group comprising In a preferred embodiment, use is made of TEMED, N,N,N',N'-tetramethylethylenediamine, available from Sigma-Aldrich. Other polymerization accelerators suitable for use with this invention include IRGACURE 2959 (2-hydroxy-1-[4-(2-hydroxyethoxy)phenyl]-2-methyl-1-propanone), IRGACURE 500 (1-Hydroxy-cyclohexyl-phenyl-ketone+ benzophenone), IRGACURE 754 (oxy-phenylacetic acid 2-[2 oxo-2 phenyl-acetoxy-ethoxy]-ethyl ester, and oxy-phe-nyl-acetic 2-[2-hydroxy-ethoxy]-ethyl ester), and the like, but is not limited thereto.

### Cross-linking.

Within the scope of this invention polymerization and/or cross-linking may be induced by a variety of mechanisms depending on the nature of the monomers used and the polymer network formed in the first and second steps.

According to a first preferred embodiment, polymerization and/or cross-linking may be induced thermally, by subjecting the reaction mixture to heating. According to a second preferred embodiment, polymerization and/or cross-linking may be induced photochemically by subjecting the reaction mixture to irradiation selected from the group of UV-irradiation, electron beam irradiation, or any other type of irradiation considered suitable by the skilled person.

### Draw solute.

This invention also relates to a draw solute containing the triple interpenetrating network hydrogel of this invention.

The draw solute may exclusively consist of the hydrogel that may be obtained with the method of this invention. This hydrogel is capable of switching between a hydrophilic state in which it is capable of absorbing solvent, and a hydrophobic state in which it is capable of releasing solvent. Switching form a hydrophilic state to a hydrophobic state may generally occur in response to a thermal trigger, by heating the hydrogel to a temperature above a lower critical solution temperature (LCST). Within the scope of this invention the "lower critical solution temperature (LCST)" defines the lowest temperature at which the draw solute comprising the triple interpenetrating network hydrogel of this invention, may be depleted of solvent, for example watered. It will however be clear to the skilled person that the temperature at which switching from the hydrophilic to the hydrophobic state takes place will depend on the nature of the hydrogel.

In an embodiment, the hydrogel of this invention may be capable of switching from the hydrophilic state to the hydrophobic state when the hydrogel is heated to a temperature of 30-70°C, preferably to a temperature of 35-65°C, more preferably to a temperature of 35-55°C or 37- 50°C. In a particularly preferred embodiment Even the LCST may be about 25-35°C or about 30-35°C. According to another preferred embodiment, the triple interpenetrating network hydrogel of this invention may be capable of switching from the hydrophilic state to the hydrophobic state when the hydrogel is heated to a temperature of 40 - 60°C, preferably to 45-55°C, more preferably to 40-50°C, most preferably to 45-48°C. Hydrogels having a LCST in the temperature ranges described above are advantageous, as they are suitable for use in ambient conditions where heating may take place using natural sources, i.e. the environment, sunlight, and cooling may be carried out by ambient air or circulating water. However, depending on the nature of the application the hydrogel may have a LCST different from the ones described above.

In an embodiment, the draw solute consists of the triple interpenetrating network hydrogel that may be obtained with the method of this invention.

In another embodiment, the draw solute may besides the hydrogel of this invention also contain one or more additives capable of controlling the viscosity of the hydrogel. The skilled person will be capable of selecting the appropriate additives and concentration thereof taking into account the envisaged application. Suitable additives include one or more inorganic materials. The inorganic material may take the form of particles of an inorganic material, for example any particulate material or filler composition considered suitable by the skilled person. In a preferred embodiment, the inorganic material includes particles of one or more clays or carbon particles, or a continuous or discontinuous filler. The inorganic material may be incorporated into the draw solute using any method considered suitable by the skilled person, for example it may be included at the time of preparing the hydrogel together with the other reactants, such as the polymerizable monomers and cross-linking agents.

### Applications.

The hydrogel of the present invention is suitable for a wide variety of uses.

The hydrogel of the present invention is for example suitable for use as a tool for delivering one or more active ingredients to the skin of a living subject. Thereby, the hydrogel may contain the active ingredient in a solution or suspension with water or with one or more organic solvents or a mixture of water with one or more organic solvents. The active ingredient may be released from the hydrogel upon skin contact, due to heating by the skin temperature.

According to another embodiment, the active ingredient is attached to the side of the hydrogel provided to contact the skin and the hydrogel contains an amount of water or solvent or a mixture thereof. The water and/or solvent may be released from the hydrogel upon skin contact, due to heating by the skin temperature, dissolve the active ingredient and penetrate the skin.

Examples of active ingredients include one or more pharmaceutically active ingredients, one or more cosmetic ingredients, one or more food ingredients for example vitamins, probiotics etc.

The hydrogel may take a wide variety of forms considered suitable by the skilled person, for example it may take the form of a gel with a consistency such that it is self-standing, or the hydrogel may be attached to a patch to be applied to the skin.

An adhesive plaster of the present invention is characterized in that it comprises one or more patches comprising the hydrogel of the present invention as described above, or the hydrogel obtained with the method described above. In a preferred embodiment, the hydrogel of the adhesive plaster contains one or more active ingredients selected from the group of pharmaceutically active ingredients, cosmetic ingredients or food supplements or a mixture of two or more hereof.

The hydrogel of the present invention may also be used for the purification of a wide variety of water-based feed solutions. Suitable examples of water-based feed solutions include aqueous saline solution, seawater, brine, brackish water, mineralized water, wastewater or a combination thereof.

According to a preferred method of this invention, the aqueous feed solution to be purified is contacted with the draw solute of the present invention or the hydrogel described above.

According to another preferred embodiment, in a forward osmosis process the hydrogel of this invention is used in combination with a selective membrane. For example, the feed solution may be seawater, which upon treatment or purification with the draw solute or hydrogel of this invention in forward osmosis permits to produce fresh water. According to another example the hydrogel of this invention is used in combination with a selective membrane for removing alcohol from alcohol containing food products, for example beer or wine.

In forward osmosis, the feed solution to be purified is displaced through a semi-permeable membrane. In particular, the semi-permeable membrane may be a semi-permeable separation layer for forward osmosis which is permeable for water or a desired solution and non-permeable to the materials to be separated off. The semi-permeable membrane used in the present invention may take any form considered suitable by the skilled person. According to a first embodiment, the semi-permeable membrane may comprise hollow fibers, in particular hollow fibers coated with at least one layer of the draw solute or the draw solute may be formed on semi-permeable membrane.

Another suitable process for use with a composition containing the hydrogel of the present invention may comprise the following steps :
1. transporting a water containing feed solution towards the hydrogel of the invention and contacting the feed solution with the hydrogel;
2. absorbing of the water by the hydrogel ;
3. transporting the feed solution containing hydrogel to a heat exchange device for example a solar panel, and displacing the hydrogel through the fluid channels of the heat exchanger, with the purpose of
4. heating the hydrogel to a temperature which is equal to or higher than the LCST of the hydrogel to cause releasing of the water by the hydrogel;
5. recovering the released water.

A preferred forward osmosis process for use with the hydrogel of the present invention may comprise the following steps :
1. contacting a water containing feed solution with a semi-permeable membrane and forcing the feed solution to pass through the semi-permeable membrane by osmotic pressure and into the hydrogel of the invention ;
2. absorbing of the water by the hydrogel ;
3. heating of the hydrogel to a temperature which is equal to or higher than the LCST of the hydrogel to cause releasing of the water by the hydrogel;
4. recovering the released water.

The semi-permeable membrane may be any suitable membrane for forward osmosis, in any suitable form. For example, the semi-permeable membrane may comprise hollow fibers. According to a particular aspect, semi-permeable membrane may comprise hollow fibers which may be coated with at least one layer of the draw solute.

A further preferred embodiment of the forward osmosis process of this invention may comprise the following steps :
1. contacting a water containing feed solution with a semi-permeable membrane and forcing the feed solution to pass through the semi-permeable membrane by osmotic pressure and into the draw solute which contains the triple interpenetrating network hydrogel of the invention ;
2. absorbing of the water by the hydrogel;
3. transporting the feed solution containing hydrogel to a heat exchanger, for example a solar panel, and displacing the hydrogel through the fluid channels of the heat exchanger, with the purpose of
4. heating the hydrogel to a temperature which is equal to or higher than the LCST of the hydrogel to cause releasing of the water by the hydrogel;
5. recovering the released water.

Contacting the feed solution with the hydrogel involves absorption of the water contained in the feed solution by the hydrogel, or penetration of the water into the hydrogel, thereby swelling the hydrogel. Any solutes contained in the aqueous feed solution are rejected, i.e. they are not absorbed by the hydrogel.

Instead of using heat as described above, separating water contained in the hydrogel from the hydrogel may comprise immersing the swollen hydrogel into pure water with temperature higher than the LCST of the hydrogel to cause the hydrogel to shrink.

The present invention presents the advantage that the temperature shift to which the hydrogel has to be exposed to achieve alternating solvent absorption/water absorption and solvent release/water release, is small. As a result, the energy needed to achieve separation of pure solvent from the feed solution is small. Therefore, a wide variety of heat sources may be used to achieve solvent release, including natural heat and waste heat sources for example solar or terrestrial heat, industrial waste heat, heated water or air flows, etc.

Contacting of the hydrogel with the feed solution may be carried out at a wide variety of temperatures, and will usually be selected by the skilled person taking into account the nature of the thermally responsive polymer. An economically favourable process is achieved when the contacting may be carried out at about 25°C.

The duration of the contacting of the hydrogel with the heat source and the separation of the solvent from the hydrogel containing the solvent, may be determined by the properties of the hydrogel for example the LCST, the conditions under which separating takes place, the contact area and contact conditions between the draw solution, semi-permeable membrane and hydrogel during the contacting.

Depending on the nature of the hydrogel, it may be necessary to condition the hydrogel prior to its contacting with the feed solution. Conditioning may for example be achieved by pre-swelling the hydrogel prior to the contacting, for example by immersing the draw solute in a solvent-based solution.

Solvent removal or separation form the hydrogel is generally carried out at a temperature adapted to the nature of the draw solute. For example, solvent separation may involve heating of the hydrogel to a temperature which is equal to or higher than the lower critical solution temperature (LCST) of the draw solute to cause solvent release. The LCST of the hydrogel may preferably be in the temperature range of between 30 and 70°C depending on the nature of the triple interpenetrating network hydrogel, preferably 35-65°C, more preferably 35-55°C or 37- 50°C. In a particularly preferred embodiment the LCST may be about 30-35°C. According to another preferred embodiment, the LCST of the triple interpenetrating network hydrogel of this invention may be a temperature of between 40 - 60°C, preferably 45-55°C, more preferably to 40-50°C, most preferably 45-48°C. It will however be clear to a skilled person that the hydrogel may be heated to any suitable temperature which is higher than the LCST of the hydrogel. It will further be clear to the skilled person that the LCST will depend on the nature of the hydrogel and the hydrogel contained therein, since the LCST varies with the nature of the hydrogel contained in the hydrogel.

In a preferred embodiment, heating may be achieved by flowing the triple interpenetrating network hydrogel of this invention through water transport channels of solar panels.

It will be clear to the skilled person that what has been explained above for the hydrogel of this invention , also holds for a draw solute containing such a hydrogel.

The invention is further illustrated in the examples below.

### First Network.

A first solution was prepared of a first monomer in water, with a total concentration of the first monomer in water of 15 wt. %, a proportion of crosslinking agent bisacrylamide (BIS) of 0.5 mol % based on N-isopropylacrylamide (NiPAAm), a proportion of redox initiator of 0.5 mol% of sodium persulfate (NaPS) and 0.5 mol% tetramethylethylenediamine (TEMED).

The first solution was subjected to polymerization under nitrogen atmosphere at 15 °C for 3 hours.

1500 mg of NiPAAm (113.16 g / mol) and 10.21 mg of BIS (154 g / mol) were dissolved in 8.5 ml of distilled water under ice-bath cooling and nitrogen flow. After at least 20 minutes nitrogen purge of the monomer solution in the closed system (3-necked flask), the reaction mixture was supplemented with 7.7 mg (9.9 µl) TEMED (116.24 g / mol) via a microsyringe and 15.77 mg NaPS by adding the initiator components (238.03 g / mol) in the form of 12.7 µl of an aqueous solution (200 mg per 1 ml). After addition of the initiator system, the reaction solution was immediately transferred by syringe (oxygen exclusion) in the precooled reaction vessels and these were tempered with exclusion of oxygen (sealed vessels - glass tubes with inner diameter about 6 mm) over the reaction time at 15 ° C. The gels were then separated and cut into approximately 2 cm long cylinder pieces and then washed in excess of MilliQ (at least 48 h and 4 water changes) and brought into the equilibrium swelling degree.

### Second Network.

A monomer solution in water was prepared of 15% by weight of NiPAAm plus 1% by mol of crosslinker BIS and, in addition, 0.124% by weight of photocrosslinker lithium phenyl-2,4-trimethylbenzoylphosphinate (LAP) (294.21 g / mol). The network 1 was brought to equilibrium swelling in monomer solution 2 (darkened) and then UV irradiated.

For the monomer solution 2, 1500 mg of NiPAAm (113.16 g / mol), 20.42 mg of bis (154 g / mol) were dissolved in 8.5 ml of distilled water under ice-bath cooling and nitrogen flow for 30 min. Subsequently, 12.4 mg LAP (294.21 g / mol) were added and the mixture is stirred under light protection for a further 10 min.

224.3 mg of network 1 (swollen) were added to 1875 mg of monomer solution 2 and brought to equilibrium over 24 h at 4 - 8 ° C (light exclusion).

A gel piece (297.5 mg) was obtained which was then removed and irradiated under inert conditions on a cooled base (ice) for 100 s with a UV lamp (DELOLUX 40, DELO, Windach).

The gels were then washed in excess of MilliQ (at least 48 h and 4 changes of water) and brought to the equilibrium swelling degree.

### Third Network.

The method as described above for the second network was repeated.

309.4 mg of network 2 (swollen) were added to 1704 mg of monomer solution 2 and brought to equilibration over 24 h at 4 - 8 ° C (light exclusion). The gel piece (346.4 mg) that was obtained was then removed and irradiated under inert conditions on a cooled base (ice) for 100 s with a UV lamp (DELOLUX 40, DELO, Windach).

The gels were then washed in excess of MilliQ (at least 48 h and 4 changes of water) and brought to equilibrium swelling (Qequi 7.64 at 20 ° C).

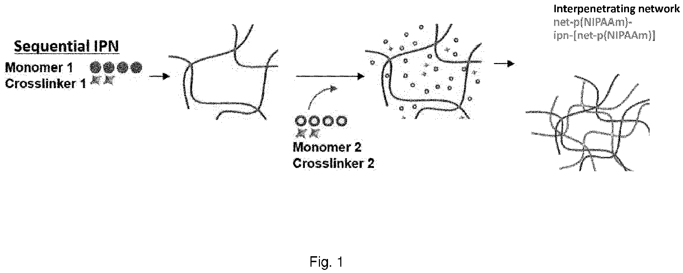

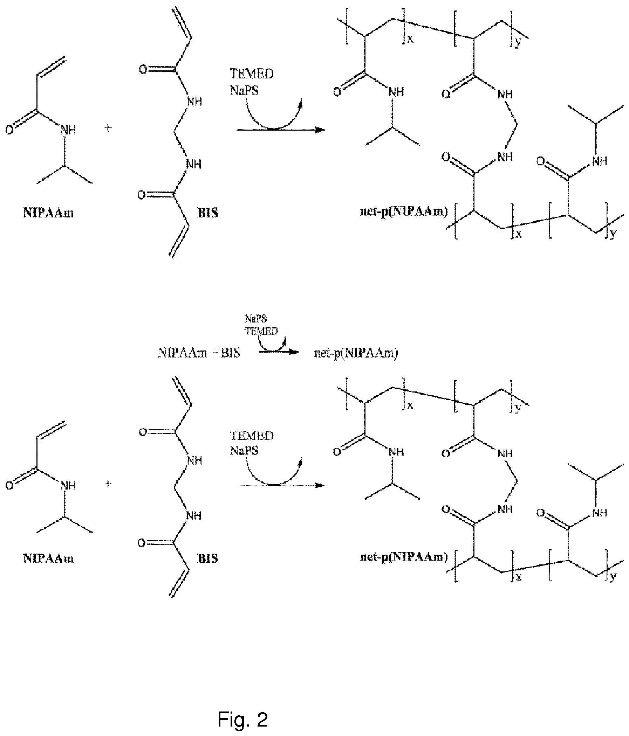

The process described above is illustrated in figure 1 and 2

The quality of the first, second and third network prepared as described above and the possibility of converting them into particles suitable for use as hydrogel, was evaluated. The results are summarized in table 3 below.

### Testing.

The hydrogel thus obtained was tested for its performance as follows.

Each of the networks described above, was tested in combination with a FO (forward osmosis) membrane (Aquaporin Inside ® forward osmosis membrane) in setup as depicted in figure 1 and consists of a cylinder (internal diameter 40 mm) equipped with flanges to accommodate the membrane, a stirred recipient for the low concentration solution and a fixed stirrer for the draw solution. The draw solution is placed inside the cylinder. Water transport will occur through the membrane, based on the difference in osmotic pressure between the (diluted) water in the outer recipient and the (concentrated) draw solution.

The transport of water was measured gravimetrically by weighing the cylinder at different time intervals during the experiment. It is assumed that pure water is transported through the membrane and that the diffusion of salts from the draw solution is negligible.

First, the FO membrane was characterized using standard NaCl in deionized water. The diluted solution was 0,02 M NaCl in deionized water. The following drawing solutions were prepared and flux was measured: 0,1M, 0,5M and 1M. All experiments were carried out at room temperature (25°C). The measured flux was plotted versus the concentration of the draw solution.

From the above it can be concluded that the hydrogel exhibits two major states: swollen (below LCST) and collapsed (above LCST). The hydrogel that was tested was initially received from the manufacturer in swollen state, most of the interparticle water removed by centrifugation. The hydrogel was first converted to collapsed state by heating to 45°C. Following, a filtration on the water-hydrogel mixture was performed to separate the water that was released from the collapsed particles. For this a Büchner-type of vacuum filtration was used with a Synder V4 membrane. This membrane is a PVDF membrane with a molecular weight cut-off of 70kDa. The flux during filtration was not monitored. Filtration was performed in a thermostatically controlled chamber at 45°C. The collapsed hydrogel was collected from the membrane surface, weighed and placed on to the surface of the FO membrane. The outer recipient was filled with 0,02M NaCl solution and the measurement started in time. Every 10' time interval, the inner cylinder was weighed to measure the amount of water absorbed by the hydrogel. The amount of water absorbed by the hydrogel was plotted as a function of time. The waterflux of the FO membrane is the mass flow rate divided by the membrane surface (i.e. 0,001257 m²). Afterwards the hydrogel was collected from the inner cylinder and FO membrane and heated again to 45°C in order to release the water that was retained in the swollen structure. The process of heating hydrogel, filtration of the collapsed hydrogel and swelling in the FO setup was repeated three times in total.

The water released from the hydrogel during the filtration step was sampled and characterized for TOC consent.

**Table 3.**

| | Type of network | Crosslinking agent | NiPAAm wt.% | BIS wt.% | Workspace | Mechanical properties |
|---|---|---|---|---|---|---|
| 1 | Single | | 12.16 | 0.5 | | Poor, no conversion into particles |
| 2 | Double | NaPS/TEMED | 15 | 1 | 0.48 | Good, conversion into particles |
| 3 | Double | NaPS/TEMED | 15 | 0.5 | 0.56 | Good, conversion into particles |
| 4 | Double | Photo curing agent | 15 | 1 | 0.59 | Good, conversion into particles |
| 5 | Double | Photo curing agent | 15 | 0.5 | 0.28 | Good, conversion into particles |
| 6 | triple | Photo curing agent | 15 | 1 | 0.8 | Good, conversion into particles |

## Claims

1. A method for producing a hydrogel capable of switching between a hydrophilic state in which the hydrogel is capable of absorbing into its workspace a liquid solvent from a feed solution and a hydrophobic state in which the gel is capable of releasing from its workspace at least part of the absorbed solvent in response to a temperature change, wherein the hydrogel comprises an interpenetrating network of a thermally responsive polymer,
- wherein in a first step a monomer for the thermally responsive polymer to polymerization to form a first polymer network,
- wherein in a second step the monomer for the thermally responsive polymer is subjected to a second polymerization step in the presence of the first polymer network, to provide an interpenetrating polymer network,
- wherein in a third step the monomer for the thermally responsive polymer is subjected to a third polymerization step in the presence of the second network polymer, to provide to provide a triple interpenetrating polymer network.

2. A method as claimed in claim 1, wherein the interpenetrating network of the hydrogel further comprises a hydrophilic polymer,
- wherein in a first step a monomer for the thermally responsive polymer and a monomer for the hydrophilic polymer are subjected to polymerization to form a first polymer network,
- wherein in a second step the monomer for the thermally responsive polymer and the monomer for the hydrophilic polymer are subjected to a second polymerization step in the presence of the first polymer network, to provide an interpenetrating polymer network,
- wherein in a third step the monomer for the thermally responsive polymer and the monomer for the hydrophilic polymer are subjected to a third polymerization step in the presence of the second polymer network, to provide to provide a triple interpenetrating polymer network.

3. A method as claimed in claim 1 or 2, wherein the reaction mixture in each of the first, second and third step is subjected to homogenization in advance of being subjected to polymerization and/or cross-linking.

4. A method as claimed in any of the previous claims, wherein the second and third step are carried out in the presence of a photo-initiator and the reaction mixture is subjected to homogenisation in advance of being subjected to irradiation to initiate cross-linking.

5. A method as claimed in claim 4, wherein the irradiation is selected from the group of UV-irradiation, electron beam irradiation.

6. A method as claimed in any of the previous claims, wherein the second and third step are carried out in the presence of a polymerization accelerator.

7. A method as claimed in any one of the previous claims, wherein the monomer for the thermally responsive polymer is selected from the group of N-isopropylacrylamide (NIPAm), N,N'-diethylacrylamide, N-vinyl-isobutylamide, N-vinyllactam, vinyl-methylether, dimethylamino-ethylmethacrylate, tetrabutyl-phosphonium p-styrene sulfonate, tributyl-hexyl phosphonium 3-sulfopropylacrylate, propylene oxide, acrylamide, ethylene oxide, tributylhexyl phosphonium 3-sulfopropyl methacrylate, tetrabutylphosphonium maleate, tetrabutyl-phosphonium fumarate, and blends comprising two or more of the afore-mentioned monomers.

8. A hydrogel comprising a triple interpenetrating polymer network of a thermally responsive polymer and a workspace within said triple interpenetrating network, wherein the hydrogel is capable of switching between a hydrophilic state in which the hydrogel is capable of absorbing liquid solvent into its workspace, and a hydrophobic state in which the gel is capable of releasing at least part of the absorbed solvent from its workspace in response to a temperature change.

9. A hydrogel according to claim 8, having a lower critical solution temperature (LCST) with a difference between the lowest temperature at which solvent absorption takes off and the highest temperature at which solvent release is initiated of maximum 10°C, preferably maximum 7.5°C, more preferably maximum 5°C.

10. A hydrogel according to claim 8 or 9, wherein a temperature at which solvent is absorbed in the workspace is at least at least 0°C, preferably at least 5°C, more preferably at least 7.5°C, most preferably at least 10°C, in particular at least 15°C.

11. A hydrogel according to any one of claims 8-10, wherein a temperature at which solvent is released from the workspace is maximum 50°C, preferably maximum 40°C, more preferably maximum 37°C, most preferably maximum 35°C, in particular maximum 30°C, more in particular maximum 25°C.

12. A hydrogel according to any one of claims 8-11 wherein the solvent is water or a mixture of water and one or more organic solvents.

13. A draw solute capable of absorbing solvent from a feed solution and of releasing absorbed solvent in response to a temperature change, where in the draw solute contains the hydrogel obtained with the method of any one of claims 1 - 8, or the hydrogel according to any one of claims 8-11 .

14. A method for purifying a water-based feed solution, comprising the steps of contacting a flow of the feed solution with a hydrogel according to any one of claims 8-12 or a draw solute according to claim 13 or a hydrogel obtained with the method according to any one of claims 1-7, and recovering purified water from the draw solute by heating the draw solute to a temperature equal to or higher than the LCST of the hydrogel contained in the draw solute.

15. A method as claimed in claim 14, wherein the feed solution is selected from the group comprising an aqueous saline solution, seawater, brine, brackish water, mineralized water, or industrial waste water, or a mixture of two or more hereof.

16. An adhesive plaster comprising one or more patches comprising the hydrogel according to any one of claims 8-12 or the hydrogel obtained with the method of any one of claims 1-7.

17. The adhesive plaster according to claim 16, wherein the hydrogel contains one or more active ingredients selected from the group of pharmaceutically active ingredients, cosmetic ingredients or food supplements or a mixture of two or more hereof.
